# EUROPÄISCHE PATENTANMELDUNG

(11) **EP 1 862 291 A2**
(43) Veröffentlichungstag der Anmeldung: **05.12.2007**
(21) Anmeldenummer: 07010237.1
(22) Anmeldetag: 23.05.2007
(51) Int. Cl.: B29C 45/14

(54) **Verfahren zur Herstellung einer Rastkette und Rastkette**

(30) Priorität: 23.05.2006 DE 102006024529
(71) Anmelder: Sand, Werner, 63802 Kleinostheim (DE)
(72) Erfinder: Sand, Werner, 63802 Kleinostheim (DE); Bäcker, Frank, 63741 Aschaffenburg (DE); Hepp, Christian, 63906 Erlenbach (DE)
(74) Vertreter: Thürer, Andreas

(57) **Zusammenfassung**

Verfahren zur Herstellung einer Rastkette (1), mit mehreren Rastkettenpartnern, die zur Verrastung von korrespondierenden Montage-Rastpartnern bei einer Montage vorgesehen sind, insbesondere zur Befestigung von Sitzbezügen im Kraftfahrzeugbereich, wobei die Ketten-Rastpartner (2) aus einem thermoplastischem Kunststoff spritzgegossen werden, wobei eine flexible Schnur (3) durch ein Spritzgießwerkzeug für einen Ketten-Rastpartner (2) geführt wird, und die flexible Schnur (3) in einem vorbestimmten Abstand (4) mittels des Spritzgießwerkzeugs mit einem Ketten-Rastpartner (2) umspritzt wird, so dass eine flexible Rastkette (1) entsteht.

## Beschreibung

Die Erfindung betrifft ein Verfahren zur Herstellung einer Rastkette nach dem Oberbegriff von Anspruch 1, eine Rastkette nach dem Oberbegriff von Anspruch 3 und eine Vorrichtung zum Anspritzen von Ketten-Rastpartnern nach dem Oberbegriff von Anspruch 10.

Bekannt ist es, Rastpartner zur Befestigung von Sitzbezügen von Kraftfahrzeugsitzen als Einzelanfertigungen oder in einem starren Verband zu fertigen.

Nachteilig ist, dass für jede Anwendung, bei welcher die Abstände oder die Anzahl der einzelnen Rastpunkte nicht kompatibel sind, ein neues, sehr teures Werkzeug im Rahmen des Herstellungsverfajhrens einzusetzen ist.

Die Aufgabe der vorliegenden Erfindung ist es, eine einfaches Herstellungsverfahren für eine Rastkette vorzuschlagen, dass eine sichere und schnelle Herstellung einer Rastkette ermöglicht.

Die Aufgabe wird gelöst durch ein Verfahren zur Herstellung einer Rastkette, mit mehreren Rastkettenpartnern, die zur Verrastung von korrespondierenden Montage-Rastpartnern bei einer Montage vorgesehen sind, insbesondere zur Befestigung von Sitzbezügen im Kraftfahrzeugbereich, wobei die Ketten-Rastpartner aus einem thermoplastischem Kunststoff spritzgegossen werden, wobei eine flexible Schnur durch ein Spritzgießwerkzeug für einen Ketten-Rastpartner geführt wird, und die flexible Schnur n einem vorbestimmten Abstand mittels des Spritzgießwerkzeugs mit einem Ketten-Rastpartner umspritzt wird, so dass eine flexible Rastkette entsteht.

Der Ketten-Rastpartner wird als Spritzgießteil hergestellt und dabei im Sinne eines Rastpartner-Längsverbunds oder längsverbundener Rastpartner an eine flexible Schnur angespritzt. Somit ist zur Herstellung lediglich ein Arbeitsschrift notwendig. Die Ketten-Rastpartner sind beanstandet angeordnet jedoch zugleich untereinander verbunden. statt Kette auch: Die Anzahl und der Abstand der Ketten-Rastpartner untereinander kann je nach Bedarf individuell eingestellt werden, ohne dass eine Umrüstung der Vorrichtung oder Änderung des Herstellungsverfahrens notwendig wäre. Es ist lediglich ein Spritzgießwerkzeug für Rastketten mit unterschiedlichen Abständen der Ketten-Rastpartner und Abstaände der Ketten-Rastpartner notwendig. Die Rastkette mit den Ketten-Rastpartnern kann einfach verlegt werden, insbesondere auch um Ecken oder Hindernisse, zudem können Toleranzen leicht ausgeglichen werden.

Vorteilhaft ist es, wenn die Schnur das Spritzgießwerkzeug in einem Basisbereich des Ketten-Rastpartners durchläuft, so dass ein überwiegender Bereich der Schnur im Bereich des Ketten-Rastpartners umspritzt ist.

Die Aufgabe wird ebenfalls gelöst durch eine Rastkette mit Ketten-Rastpartnern, wobei die Ketten-Rastpartnern an einer flexiblen Schnur in einem vorbestimmten Abstand durch Umspritzen mittels eines Spritzgießwerkzeugs angespritzt sind, insbesondere hergestellt nach einem Verfahren nach Anspruch 1 oder 2.

Bei dieser Vorgehensweise ist es möglich, auf einfache Weise eine individuelle Teilung und eine beliebige Anzahl der Rastpunkte vorzusehen. Das Verlegen um sehr kleine Ecken und Hindernisse wird durch die vorgeschlagene Rastkette sehr einfach. Toleranzen können zumindest in eine Richtung sehr leicht ausgeglichen werden. Zudem ist das Einrasten des Montage-Rastpartners erleichtert, das die Schnur aufgrund ihrer Beweglichkeit leicht verschoben und an die räumlichen Vorgaben angepasst werden kann. Ebenso kann die Demontage ohne Werkzeug erfolgen. Insbesondere wenn der Ketten-Rastpartner und/oder der Montage-Rastpartner mit einem Haken versehen ist, kann die Verbindung durch Verkippen leicht gelöst werden.

Vorteilhaft ist es, wenn der Ketten-Rastpartner einen Rastbereich und einen Basisbereich aufweist und ist in dem Basisbereich mit Schnur verbunden.

Vorteilhaft ist es, wenn die Schnur in einem Zentralbereich des Basisbereichs des Ketten-Rastpartners angeordnet ist.

Vorteilhaft ist es, wenn der Abstand der Ketten-Rastpartner zumindest der Breite des Ketten-Rastpartners entspricht. Hiedurch ist eine leichte Beweglichkeit der Kette gegeben und die Montage-Rastpartner können schnell und sicher in die Rastbereiche der Ketten-Rastpartner eingesetzt werden.

Vorteilhaft ist es, wenn unterschiedliche Abstände zwischen Ketten-Rastpartnem zu wählen sind. Auf diese Weise kann die Kette ohne zusätzlichen Aufwand im selben Herstellungsgang durch Schieben der Schnur an die Anforderungen des produkts angepasst werden.

Es wird worgeschlagen, die überwiegende Anzahl der für ein Produkt einzusetzenden Ketten-Rastpartner an einer Schnur angespritzt sind. Es ist vorteilhaft ein Endlosband herzustellen, weil es dem Kunden eine individuelle Konfektionierung vor Ort ermöglicht.

Vorteilhaft ist es, wenn die Schnur aus einem ähnlichen oder demselben Kunststoffmaterial aufgebaut ist, wie der Ketten-Rastpartner. Die gesamte Kette ist insbesondere recyclingfähig, wenn beide Kunststoffe gleich und recyclingfähig gewählt werden, insbesondere wenn es sich bei der Schnur auch um einen Thermoplast handelt.

Die Aufgabe wird ebenfalls gelöst durch eine Vorrichtung zum Anspritzen von Ketten-Rastpartnern an eine flexible Schnur, zur Verwendung in einem Verfahren nach Anspruch 1 oder 2, wobei die Vorrichtung im Bereich eines Spritzgießwerkzeugs zur Bildung eines Ketten-Rastpartners eine durchgehende Öffnung aufweist, die so angeordnet ist, dass an einer belastbaren Stelle des Ketten-Rastpartners die durch die Öffnung hindurchgeführte Schnur anzuspritzen ist.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind; es zeigen:
- Fig. 1a: eine Rastkette mit zwei Rastpartnem in perspektivischer Ansicht,
- Fig. 1b: die Rastkette nach Fig. 1a in einer Seitenansicht,
- Fig. 2a: eine Rastkette in perspektivischer Ansicht mit Montage-Rastpartner,
- Fig. 2b: die Rastkette nach Fig. 2a in Seitenansicht,
- Fig. 2c: die Rastkette nach Fig. 2a in Aufsicht,
- Fig. 2d: die Rastkette nach Fig. 2a in Seitenansicht,
- Fig. 3a: eine Rastkette mit eingesetztem Montage-Rastpartner,
- Fig. 3b: die Rastkette nach Fig. 3a mit gekipptem Montage-Rastpartner,
- Fig. 3c: die Rastkette nach Fig. 3a mit gekipptem Montage-Rastpartner und
- Fig. 3d: die Rastkette nach Fig. 3a mit gekipptem Montage-Rastpartner.

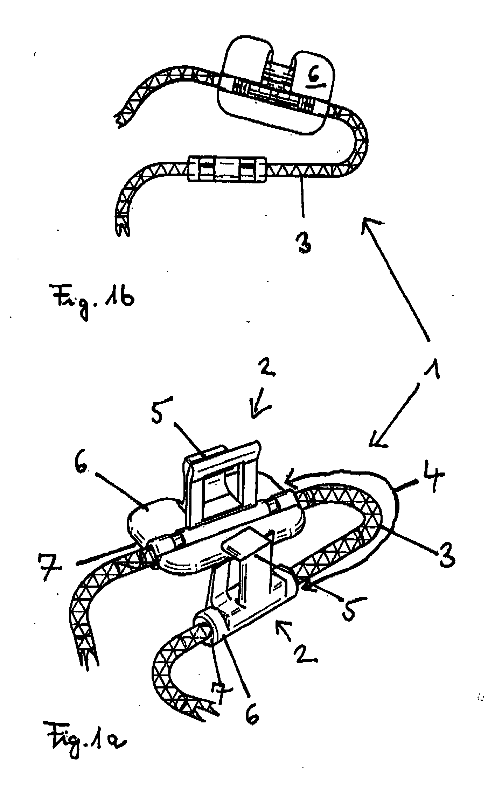

Fig. 1a zeigt eine Rastkette 1 mit beispielhaft zwei Ketten-Rastpartnern 2 in perspektivischer Ansicht. Die Ketten-Rastpartner 2 sind an einer flexiblen Schnur 3 mittels eines Kunststoffspritzgießverfahrens in einem vorbestimmten Abstand 4 angespritzt. Die Figur zeigt zwei unterschiedliche Ketten-Rastpartner 2, wobei ein breiter oder eine schmaler Basisbereich 6 vorgesehen sind und der Rastbereich 5 der Ketten-Rastpartner 2 jeweils einen Montage-Rastpartner 8, wie beispielsweise in Fig. 2a-d gezeigt, aufnehmen kann. Die Schnur ist vorteilhaft in einem Zentralbereich 7 des Basisbereichs 6 untergebracht, wobei die Spritzgussmasse die Schnur in einer Längsrichtung und radial umgebend einfasst, so dass ein sehr guter Halt gegen ein Ausreißen aufgrund von mechanischen Belastungen gegeben ist.

Fig. 1 b zeigt die Rastkette 1 nach Fig. 1a in einer Seitenansicht. Die Schnur 3 durchläuft den Basisbereich in einer Längsrichtung

Fig. 2a zeigt eine Rastkette 1 in perspektivischer Ansicht mit Montage-Rastpartner 8. Der Montage-Rastpartner 8 weist an seiner unteren Kante 9 eine hakenförmige Nase auf, mit der ein sicheres Einhaken in den Rastbereich 5 des Ketten-Rastpartners 2 möglich ist.

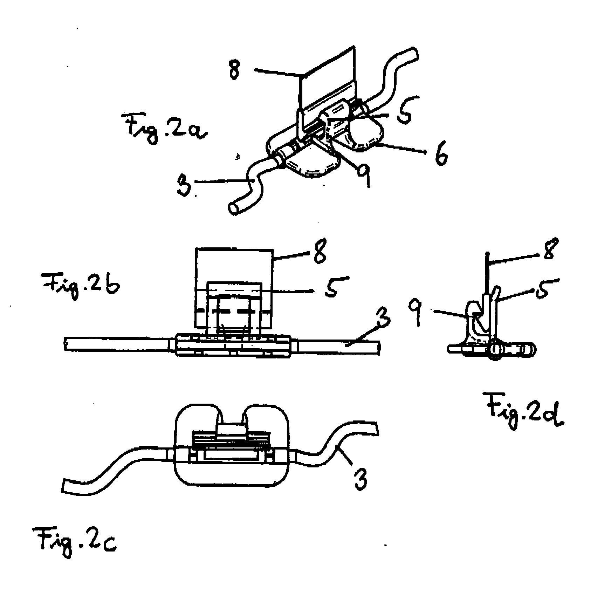

Fig. 2b zeigt die Rastkette 1 nach Fig. 2a in Seitenansicht, Fig. 2c zeigt die Rastkette 1 nach Fig. 2a in Aufsicht und Fig. 2d zeigt die Rastkette 1 nach Fig. 2a in Seitenansicht.

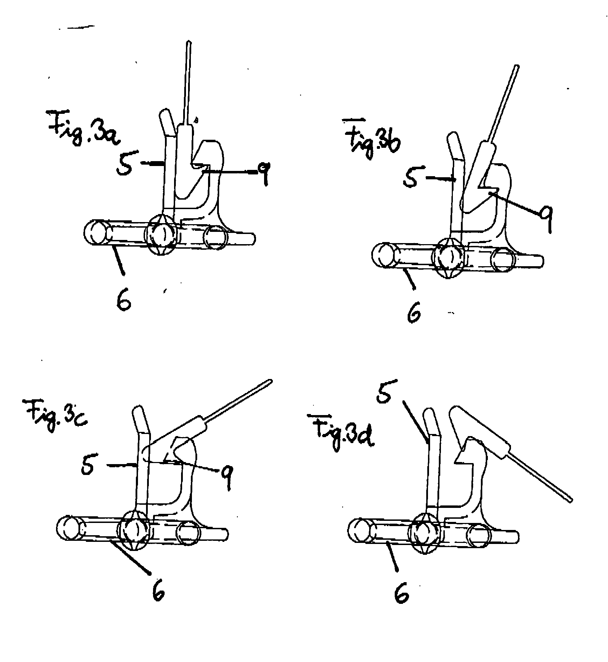

Fig. 3a zeigt eine Rastkette 1 mit eingesetztem Montage-Rastpartner 8 in Seitenansicht. Fig. 3b zeigt die Rastkette 1 nach Fig. 3a mit gekipptem Montage-Rastpartner 8. Das Kippen lässt sich leicht ausführen, da das Ketten-Rastpartner leicht beweglich ist und an die Bewegung des Montage-Rastpartners angepasst werden kann. Fig. 3c zeigt die Rastkette 1 nach Fig. 3a mit weiter gekipptem Montage-Rastpartner 8. Fig. 3d zeigt die Rastkette 1 nach Fig. 3a mit ausgekipptem Montage-Rastpartner 8.

### BEZUGSZEICHENLISTE

- 1: Rastkette
- 2: Ketten-Rastpartner
- 3: Schnur
- 4: Abstand
- 5: Rastbereich
- 6: Basisbereich
- 7: Zentralbereich
- 8: Montage-Rastpartner
- 9: Kante

## Patentansprüche

1. Verfahren zur Herstellung einer Rastkette (1), mit mehreren Rastkettenpartnern, die zur Verrastung von korrespondierenden Montage-Rastpartnern (8) bei einer Montage vorgesehen sind, insbesondere zur Befestigung von Sitzbezügen im Kraftfahrzeugbereich, wobei die Ketten-Rastpartner (2) aus einem thermoplastischem Kunststoff spritzgegossen werden, wobei eine flexible Schnur (3) durch ein Spritzgießwerkzeug für einen Ketten-Rastpartner (2) geführt wird, und die flexible Schnur (3) in einem vorbestimmten Abstand (4) mittels des Spritzgießwerkzeugs mit einem Ketten-Rastpartner (2) umspritzt wird, so dass eine flexible Rastkette (1) entsteht.

2. Verfahren nach Anspruch 1, **dadurch gekennzeichnet, dass** die Schnur das Spritzgießwerkzeug in einem Basisbereich (6) des Ketten-Rastpartners (2) durchläuft, so dass ein überwiegender Bereich der Schnur (3) im Bereich des Ketten-Rastpartners (2) umspritzt ist.

3. Rastkette (1) mit Ketten-Rastpartnern (2), wobei die Ketten-Rastpartnern (2) an einer flexiblen Schnur (3) in einem vorbestimmten Abstand (4) durch Umspritzen mittels eines Spritzgießwerkzeugs angespritzt sind, insbesondere hergestellt nach einem Verfahren nach Anspruch 1 oder 2.

4. Rastkette nach Anspruch 3, **dadurch gekennzeichnet, dass** der Ketten-Rastpartner (2) einen Rastbereich (5) und einen Basisbereich (6) aufweist und ist in dem Basisbereich (6) mit Schnur (3) verbunden.

5. Rastkette nach Anspruch 3 oder 4, **dadurch gekennzeichnet, dass** die Schnur (3) in einem Zentralbereich (7) des Basisbereichs (6) des Ketten-Rastpartners (2) angeordnet ist.

6. Rastkette nach einem der Ansprüche 3 bis 5, **dadurch gekennzeichnet, dass** der Abstand (4) der Ketten-Rastpartner (2) zumindest der Breite des Ketten-Rastpartners (2) entspricht.

7. Rastkette nach einem der Ansprüche 3 bis 6, **dadurch gekennzeichnet, dass** unterschiedliche Abstände zwischen Ketten-Rastpartnern (2) zu wählen sind.

8. Rastkette nach einem der Ansprüche 3 bis 7, **dadurch gekennzeichnet, dass** die überwiegende Anzahl der für ein Produkt einzusetzenden Ketten-Rastpartner (2) an einer Schnur (3) angespritzt sind.

9. Rastkette nach einem der Ansprüche 3 bis 8, **dadurch gekennzeichnet, dass** die Schnur (3) aus einem ähnlichen oder demselben Kunststoffmaterial aufgebaut ist, wie der Ketten-Rastpartner (2).

10. Vorrichtung zum Anspritzen von Ketten-Rastpartnern (2) an eine flexible Schnur (3), zur Verwendung in einem Verfahren nach Anspruch 1 oder 2, wobei die Vorrichtung im Bereich eines Spritzgießwerkzeugs zur Bildung eines Ketten-Rastpartners (2) eine durchgehende Öffnung aufweist, die so angeordnet ist, dass an einer belastbaren Stelle des Ketten-Rastpartners (2) die durch die Öffnung hindurchgeführte Schnur (3) anzuspritzen ist.
